# FASCICULE DE BREVET EUROPEEN

(11) **EP 1 176 387 B1**
(45) Date de publication et mention de la délivrance du brevet: **28.12.2011**
(21) Numéro de dépôt: 01402022.6
(22) Date de dépôt: 26.07.2001
(51) Int. Cl.: G01B 9/02, G02B 27/10

(54) **Dispositif modulaire de recombinaison interférométrique**
Modulare Vorrichtung für interferometrische Rekombination
Modular device of interferometric recombination

(30) Priorité: 27.07.2000 FR 0009834
(43) Date de publication de la demande: 30.01.2002
(73) Titulaire: Thales, 92 Neuilly sur Seine (FR)
(72) Inventeur: Lund, Glenn, 06440 Peillon (FR); Viard, Thierry, 06210 Mandelieu (FR)
(74) Mandataire: Esselin, Sophie

(56) Documents cités:
- EP-A- 0 591 912
- WO-A-98/01767
- DE-C- 4 212 271
- FR-A- 2 676 808
- US-A- 5 015 100
- US-A- 5 148 318
- US-A- 5 734 507

## Description

L'invention concerne un dispositif modulaire de recombinaison interférométrique et un séparateur de faisceau électromagnétique qui constitue l'un des éléments permettant de constituer ce dispositif.

Le dispositif est particulièrement destiné à être exploité pour permettre une recombinaison interférométrique précise de faisceaux électromagnétiques élémentaires provenant d'un même objet source. Le dispositif et le séparateur sont prévus pour être exploités avec des faisceaux électromagnétiques constitués d'ondes permettant une telle reconstitution et donc en particulier d'ondes UHF ou d'une des bandes de fréquences supérieures incluant les fréquences optiques allant du domaine de l'infrarouge à celui de l'ultraviolet, en passant par le domaine du visible.

Il est possible de synthétiser, en termes de pouvoir de résolution, un collecteur et notamment un collecteur optique de grandes dimensions, de manière modulaire à partir de collecteurs plus petits, par exemple à des fins d'observation astronomique. Cette technique peut notamment être exploitée dans des domaines tels que celui de l'observation de la terre et celui de l'astronomie spatiale à très haute résolution. Elle est aussi utilisée à des fins de détection de faibles objets par interférométrie coronographique. Un des principaux problèmes liés à la réalisation d'un dispositif fonctionnant en interféromètre, selon cette technique, est d'obtenir une recombinaison suffisamment précise des faisceaux élémentaires provenant chacun d'un des différents collecteurs, ici dits de synthèse, qui sont exploités pour obtenir le collecteur de grandes dimensions. Il est particulièrement important que les faisceaux élémentaires aient des caractéristiques de phase et d'amplitude exactement en accord avec les besoins de l'interféromètre, là où ils se superposent.

Ce problème est compliqué par le fait que, dans certaines applications, il est nécessaire de fractionner l'énergie du faisceau faisceau élémentaire, fourni par un collecteur de synthèse, pour la partager entre plusieurs bras de l'interféromètre, ce qui induit une réduction de l'amplitude moyenne de l'énergie disponible dans chacune des voies définies par ces bras.

Un second problème posé est lié au fait que l'interférence entre faisceaux élémentaires se réalise en chaque point de la section du faisceau combiné qui est obtenu, lorsque des faisceaux élémentaires sont coaxialement superposés. De ce fait, la moindre différence en amplitude, par rapport au niveau idéal, affectant la répartition spatiale entre faisceaux élémentaires, soit donc transversalement par rapport à la direction de propagation, se traduit par une erreur en intensité selon cette répartition spatiale. Le signal enregistré qui découle de la détection des faisceaux élémentaires combinés, intègre le cumul des erreurs d'intensité, et il est donc erroné. L'erreur affectant le signal enregistré peut varier dans de grandes proportions, car elle est affectée par la moindre variation de coaxialité entre faisceaux élémentaires combinés.

Dans la majorité des cas, il est prévu de réaliser la recombinaison interférométrique des faisceaux élémentaires issus des collecteurs de synthèse, en mode "pupille", avec des faisceaux élémentaires qui doivent être parfaitement alignés. Un séparateur de faisceau (beam-splitter) de type lame semi-transparente est généralement utilisé à cette fin, toutefois la sélectivité en matière de longueur d'onde des propriétés de réflexion et de transmission d'un tel séparateur, qui correspond à la chromaticité dans le domaine optique visible, constitue un sérieux inconvénient. En effet, les disparités, ainsi introduites entre faisceaux élémentaires, induisent des erreurs inacceptables qui ne peuvent être corrigées ultérieurement, et elles empêchent d'obtenir une précision satisfaisante de recombinaison interférométrique.

L'invention propose donc un dispositif de recombinaison interférométrique composé d'au moins un et généralement d'une pluralité de modules de recombinaison. US 5 015 100 divulgue un séparateur de faisceau.

Le dispositif et en conséquence le module permettant de le réaliser sont prévus pour permettre une recombinaison interférométrique optimale de faisceaux électromagnétiques élémentaires et plus particulièrement de faisceaux fournis, à partir d'une même source, par une pluralité de collecteurs qui sont associés, notamment de manière à synthétiser un collecteur optique de grandes dimensions.

Le dispositif de l'invention est défini par la revendication 1.

Selon une forme de réalisation du dispositif selon l'invention, le ou les coupleurs d'un module sont obtenus chacun par jonction locale d'au moins deux fibres optiques monomodes couplées dans une structure en X ou en Y, chacune des fibres recevant à une extrémité d'entrée un faisceau qui lui est transmis à partir d'un collecteur par l'intermédiaire d'au moins un séparateur de faisceau, les faisceaux reçus par un même coupleur étant issus de collecteurs différents.

Selon une variante de cette forme de réalisation du dispositif selon l'invention, un module de dispositif comporte au moins une optique de focalisation qui transmet une partie de faisceau incident provenant d'un séparateur de faisceau vers une extrémité d'entrée d'une des fibres comportées par un coupleur, cette optique étant exploitée pour moduler en amplitude le faisceau appliqué à l'extrémité d'entrée de la fibre.

Selon une autre variante de réalisation, un module est susceptible de comporter au moins deux séparateurs de faisceau montés en cascade.

Selon une forme de réalisation, le dispositif assure une recombinaison interférométrique de faisceaux optiques transmis par des collecteurs, de type télescope, qui sont orientés vers une même source de rayonnement, il comporte une pluralité de modules tels que prévus ci-dessus, qui sont associés chacun à au moins deux des collecteurs afin de recombiner de manière interférométrique les faisceaux optiques parvenant de ces collecteurs.

Le séparateur de faisceau comporte des moyens d'interception positionnés ou positionnables pour pouvoir intercepter au moins une partie d'un faisceau incident à diviser pour la réfléchir en partie ou éventuellement en totalité dans au moins une direction par une surface réfléchissante, le nombre de directions prévues étant fixé par le nombre surfaces réfléchissantes recevant le faisceau à diviser dans la configuration géométrique choisie pour les moyens d'interception, et/ou pour absorber au moins une partie du faisceau intercepté par l'intermédiaire d'une surface absorbante, tout en permettant le passage en traversée de l'éventuelle partie de faisceau incident qui n'est pas interceptée.

Selon une forme de réalisation d'un séparateur, les moyens d'interception sont constitués par une surface réfléchissante à bordure circulaire qui est rendue incomplète par création d'une ouverture correspondant à l'absence d'un secteur ou d'un segment de la surface réfléchissante, plane ou courbe, de manière à assurer une découpe géométrique d'un faisceau à diviser sur le trajet duquel cette surface est interposée en permettant d'obtenir deux faisceaux, l'un réfléchi par la surface et l'autre transmis au travers de l'ouverture dans des proportions correspondant aux dimensions respectives de l'ouverture et de la surface réfléchissante situées sur le trajet du faisceau à diviser soumis à découpe par le séparateur.

Selon une autre forme de réalisation d'un séparateur, les moyens d'interception sont constitués par une surface réfléchissante à bordure circulaire qui est rendue incomplète par création d'une ouverture centrale permettant d'obtenir un résultat correspondant globalement à celui obtenu avec la forme de réalisation envisagée précédemment.

Selon une autre forme de réalisation d'un séparateur, les moyens d'interception sont constitués par une pluralité de surfaces réfléchissantes, planes ou concaves qui sont réunies et dont les bords jointifs délimitent les faces latérales d'une pyramide, qui est interposée sur le trajet d'un faisceau à diviser et dont le sommet est orienté pour être atteint en premier par ledit faisceau à diviser, chaque surface assurant la réflexion dans une direction qui lui est propre d'un faisceau réfléchi qui correspond à la portion du faisceau à diviser qu'elle reçoit.

Selon une variante de réalisation, les moyens d'interception sont constitués par deux surfaces réfléchissantes réunies en un dièdre, qui est interposé sur le trajet d'un faisceau à diviser et dont l'arête est orientée pour être atteinte en premier par ledit faisceau à diviser, chaque face assurant la réflexion dans une direction qui lui est propre d'un faisceau réfléchi qui correspond à la portion du faisceau à diviser qu'elle reçoit.

L'invention, ses caractéristiques et ses avantages sont précisés dans la description qui suit en liaison avec les figures répertoriées ci-dessous.
La figure 1 présente un schéma de principe relatif à un exemple d'agencement connu de combinaison de faisceaux.
Les figures 2 à 5 présentent différentes formes de réalisation de séparateurs de faisceau.
La figure 6 présente un schéma de principe d'un module de recombinaison de faisceaux optiques d'un dispositif de recombinaison interférométrique constitué à l'aide de séparateurs selon l'invention.

L'agencement schématiquement représenté, à titre d'exemple, sur la figure unique est prévu pour permettre une recombinaison exploitant trois faisceaux élémentaires Fᵢ₁, Fᵢ₂, Fᵢ₃ provenant d'une même source optique, par exemple une étoile non représentée. Ces faisceaux sont supposés collectés par l'intermédiaire de trois collecteurs, dont seules les pupilles de sortie respectives P1, P2 et P3 sont représentées.

Il est également supposé qu'il est prévu de combiner les faisceaux optiques incidents entre eux d'une manière déterminée et par exemple d'une partie du faisceau Fᵢ₁ avec une partie du faisceau Fᵢ₂ et une autre partie de ce faisceau Fᵢ₂ avec au moins une partie du faisceau Fᵢ₃. Des lames semi-transparentes sont interposées à cet effet sur le trajet des faisceaux. Une lame semi-transparente L1 est interposée de manière connue sur le trajet du faisceau Fᵢ₁ pour, d'une part, être partiellement traversée par une partie de ce faisceau qui constitue un faisceau Fᵣ₁ et pour partiellement réfracter, d'autre part, une autre partie du faisceau Fᵢ₁ qui forme un faisceau Fᵣ₁. Une lame semi-transparente L2 effectue la même opération en ce qui concerne le faisceau Fᵢ₂ sur le trajet duquel elle est interposée. Elle sépare donc ce faisceau Fᵢ₂ en un faisceau qui la traverse et un faisceau Fᵣ₂ qu'elle réfracte.

Le faisceau réfracté Fᵣ₂ est ici supposé dirigé dans les conditions déterminées connues vers une lame semi-transparente L3 de manière à s'y réfracter, la lame semi-transparente L3 étant disposée sur le trajet du faisceau incident Fᵢ₃ de manière à permettre à une partie de ce dernier de la traverser. Cette partie se combine alors au faisceau obtenu par réfraction du faisceau Fᵣ₂ au niveau de la lame pour constituer un faisceau F_{c23}.

De manière analogue, le faisceau réfracté Fᵣ₁ est dirigé vers une lame semi-transparente L4 où il est à nouveau réfracté. La lame L4 est ici supposée disposée sur le trajet de la partie du faisceau incident Fᵢ₂ qui a traversé la lame de manière à être traversée par cette partie qui se combine donc avec la partie du faisceau Fᵣ₁ réfractée au niveau de cette lame L4 pour constituer un faisceau F_{c12}.

L'obtention de faisceaux combinés de cette manière présente des inconvénients connus évoqués plus haut et n'est donc pas réellement satisfaisante.

Il est donc prévu, selon l'invention, de remplacer les séparateurs que constituent les lames semi-transparentes, telles qu'envisagées ci-dessus, par des séparateurs de faisceau dans lesquels la séparation est réalisée de façon géométrique par des moyens n'impliquant pas de réfraction.

Ceci est obtenu, selon l'invention, en interposant sur le trajet d'un faisceau, que l'on veut diviser, un séparateur constitué par des moyens positionnés de manière à venir intercepter ce faisceau pour le réfléchir ou éventuellement l'absorber en partie ou en totalité, la réflexion s'effectuant dans au moins une direction, le nombre de directions étant fonction de la configuration géométrique choisie pour les moyens d'interception.

La constitution matérielle exacte des moyens d'interception, lorsqu'ils sont réfléchissants ou absorbants, dépend bien entendu de la bande de longueurs d'ondes où est située le faisceau à diviser, le choix des matériaux peut donc être effectué en fonction de la bande de longueurs d'onde concernée par simple mise en oeuvre des connaissances techniques usuelles dont dispose l'homme de métier.

Sur le plan géométrique, les moyens réfléchissants sont des éléments comportant une ou plusieurs surfaces réfléchissantes planes ou courbes qui sont par exemple réparties sur un corps ou éventuellement réunies en un assemblage tridimensionnel. Ces moyens peuvent éventuellement se limiter à une seule surface réfléchissante, ou encore être constituées par plusieurs faces réfléchissantes, par exemple par deux faces réfléchissantes formant un dièdre ou encore par les faces latérales d'une pyramide.

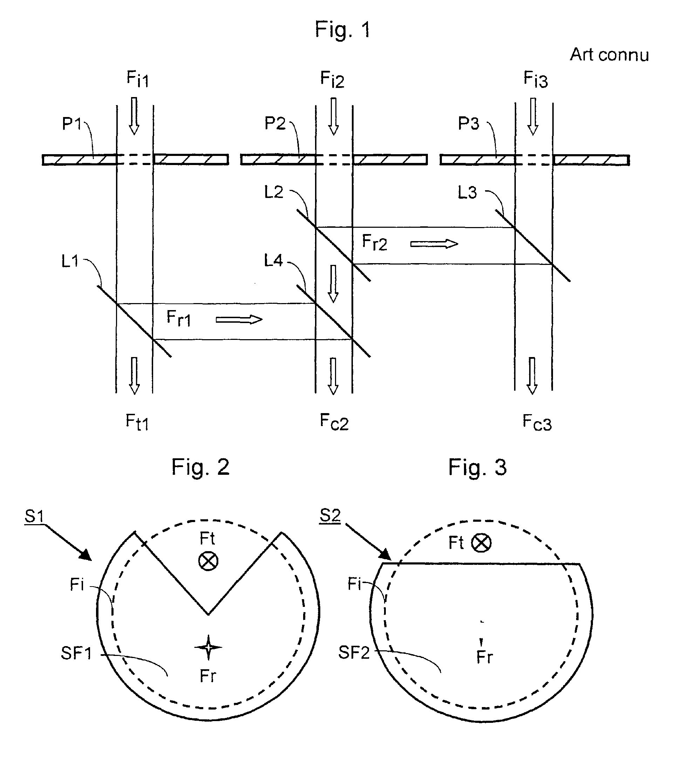

Différents exemples de réalisation sont ainsi présentés en liaison avec les figures 2 à 5. Il est supposé, pour chacune, un faisceau incident à diviser, d'allure cylindrique, qui est centré sur le milieu de la figure et orienté perpendiculairement au plan que défini la feuille portant cette figure, et qui est supposé transmis vers la face de la feuille où se trouve cette figure. Ce faisceau est supposé avoir une section transversale qui est symbolisée par un cercle en pointillé référencé Fi sur les quatre figures.

Dans les exemples de réalisation présentés sur les figures 2 à 4, le séparateur est constitué par des moyens de réflexion qui sont destinés à être positionnés de manière à ne venir intercepter qu'une partie du faisceau incident Fi à partir duquel une séparation doit être réalisée.

Les séparateurs S1 et S2 respectivement schématisés sur les figures 2 et 3 sont constitués chacun par un élément comportant une surface réfléchissante plane SF1 ou SF2 d'allure circulaire rendue incomplète par création d'une ouverture correspondant à l'élimination d'un secteur de cercle dans le cas de la surface réfléchissante du séparateur S1 et d'un segment de cercle dans le cas de la surface réfléchissante du séparateur S2, de manière que le faisceau incident Fi ne soit que partiellement intercepté par le séparateur placé sur son trajet. La partie non interceptée constitue un faisceau Ft dont la direction est symbolisée par un empennage de flèche sur les figures et dont les caractéristiques se déduisent directement de celles du faisceau Fi dont il est issu, puisqu'il ne subit aucune transformation. La partie du faisceau Fi qui est interceptée par la surface réfléchissante du séparateur S1 ou S2 est réfléchie perpendiculairement au plan de l'élément réfléchissant pour former un faisceau Fr, symbolisé par une pointe de flèche, dont l'orientation peut être précisément définie, connaissant les orientations respectives dans l'espace du faisceau incident Fi et de la surface réfléchissante plane SF1 ou SF2 constituant le séparateur considéré. Il n'y a donc pas de dégradation du faisceau réfléchi par rapport au faisceau incident et en particulier pas de dégradation chromatique dans le cas d'un faisceau optique.

Il est ainsi possible de définir à volonté la répartition entre le faisceau transmis Ft et le faisceau réfléchi Fr obtenu par découpage géométrique d'un faisceau incident Fi en fixant les surfaces respectives réfléchissante et d'ouverture interposées sur le trajet du faisceau incident et, par exemple, en agissant sur l'angle d'ouverture du secteur de cercle de l'ouverture. Il est par ailleurs possible de faire varier la répartition entre ces faisceaux, en particulier pour réglage, si le séparateur peut être déplacé de manière que, par exemple, sa surface réfléchissante reste parallèle à elle-même, de manière à augmenter ou alternativement réduire la portion de cette surface réfléchissante qui s'interpose sur le trajet du faisceau incident Fi.

Le séparateur S3 schématisé, à titre de variante sur la figure 2 est par exemple constitué par un élément dont la surface réfléchissante SF3 est annulaire plane ou tronconique et comporte une ouverture circulaire centrale au travers de laquelle passe une partie du faisceau incident Fi qui constitue un faisceau Ft transmis sans modification. Ces deux faisceaux Fi et Ft alignés ne se différencient que par les surfaces de leurs sections transversales respectives qui correspondent au cercle dessiné en tireté pour le faisceau incident Fi et au cercle, plus petit qui borde l'ouverture centrale pour le faisceau transmis Ft. Le choix du rapport entre ces deux surfaces est modulable, comme dans les formes de réalisation précédentes pour permettre d'obtenir la répartition entre faisceau incident et faisceau transmis qui est souhaité. La partie du faisceau incident Fi qui est réfléchi par l'élément annulaire réfléchissant S3 est susceptible de se présenter sous la forme d'un faisceau Fr axialement creux et d'allure cylindrique ou tronconique, convergente ou divergente au choix dans ce dernier cas.

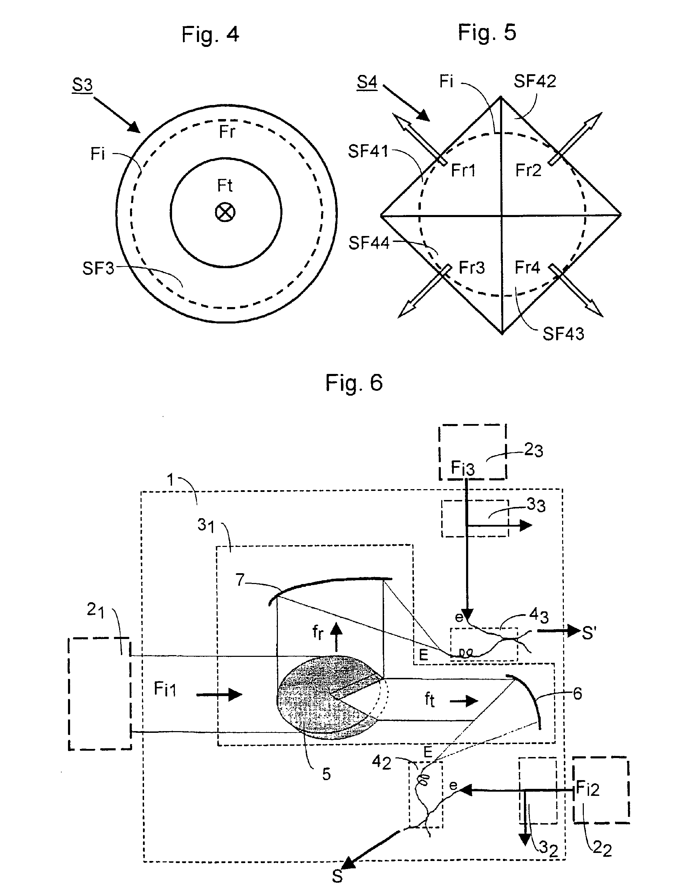

Le séparateur S4 schématisé sur la figure 4 est un exemple d'un séparateur comportant des moyens réfléchissants prévus pour être positionnés de manière à venir s'interposer sur le trajet d'un faisceau incident pour réfléchir ce faisceau en totalité sous la forme de faisceaux réfléchis orientés dans des directions différentes. Dans l'exemple présenté, les moyens réfléchissants sont formés par quatre surfaces SF41 à SF44 constituant les quatre faces latérales d'une pyramide à base carrée, au niveau desquelles le faisceau incident se sépare en quatre faisceaux réfléchis Fr1, Fr2, Fr3 et Fr4, orientés chacun perpendiculairement à une de ces faces latérales de pyramide, comme schématisé par les quatre flèches présentes sur la figure 4. La répartition du flux correspondant au faisceau incident en quatre flux relatifs chacun à un des faisceaux réfléchis, qui est ici supposée équilibrée entre les quatre faisceaux réfléchis, peut, elle aussi, être modifiée par un déplacement approprié du séparateur. D'autres répartitions, en particulier entre un nombre différent de faisceaux, peuvent aussi être obtenues par modification de la géométrie spatiale du séparateur, qui peut par exemple être constitué par un corps possédant deux faces réfléchissantes planes formant un dièdre ou par les "n" faces latérales d'une pyramide à base polygonale régulière ou non.

Les divers types de séparateurs de faisceau évoqués ci-dessus sont plus particulièrement destinés à être exploités dans des dispositifs de recombinaison interférométrique et plus particulièrement dans des dispositifs constitués de manière modulaire.

Trois faisceaux Fᵢ₁, Fᵢ₂, Fᵢ₃ sont schématisés, à titre d'exemple, sur la figure 6, ils sont supposés obtenus à partir d'un objet source situé à une distance assimilable à l'infini par l'intermédiaire de trois collecteurs de synthèse, 2₁, 2₂, 2₃, d'un ensemble où de tels collecteurs de synthèse sont associés afin de constituer un collecteur, de constitution modulaire et de grandes dimensions, non représenté.

Ces collecteurs de synthèse sont ici supposés être des télescopes alignés sur une même source optique en vue de permettre une recombinaison interférométrique des faisceaux obtenus par chacun d'eux à partir du rayonnement lumineux, en provenance de la source, qu'il capte. La recombinaison des différents faisceaux est réalisée par l'intermédiaire de modules, identiques ou similaires et compatibles, associés en cascade de manière à constituer un dispositif faisant fonction d'interféromètre, dont le principe est précisé plus loin.

Est plus particulièrement considérée, à titre d'exemple, une recombinaison concernant un faisceau élémentaire Fᵢ₁ scindé en deux parties qui sont séparément exploitées à des fins interférométriques et qui sont respectivement combinées l'une avec une partie d'un faisceau élémentaire Fᵢ₂ provenant d'un collecteur 2₂ et L'autre avec une partie d'un faisceau élémentaire Fᵢ₃ provenant d'un collecteur 2₃. Le module de dispositif de recombinaison interférométrique, selon l'invention, qui est représenté en figure 6, comporte essentiellement un montage optique diviseur 3₁ et un ou plusieurs coupleurs optiques de recombinaison, tels les coupleurs 4₂, 4₃. Chaque coupleur permet ici de combiner un couple de faisceaux optiques élémentaires.

Le montage 3₁ comporte un séparateur optique 5, non dioptrique, qui est prévu pour partager le faisceau élémentaire incident Fᵢ₁ en deux faisceaux co-alignés dont l'un est directement transmis, alors que l'autre est réfléchi. Ce séparateur 5 est par exemple du type de celui qui est illustré sur la figure 2, il est donc constitué par un miroir de séparation incliné qui est de forme circulaire et qui comporte une ouverture latérale présentant la forme d'un secteur circulaire d'angle donné. Ce miroir est interposé sur le trajet du faisceau incident Fᵢ₁, de manière à diviser ce faisceau en deux, un faisceau fᵣ est obtenu par réflexion d'une partie du faisceau incident Fᵢ₁ et un faisceau fₜ correspond à la partie du faisceau Fᵢ₁ qui passe au travers de l'ouverture du miroir et qui ne subit aucune modification.

Le faisceau fₜ passant au travers de l'ouverture du miroir de séparation est dirigé vers un miroir de focalisation 6, ici supposé appartenant au montage optique diviseur 3₁. Le miroir de focalisation envoie le faisceau fₜ vers une entrée E d'un coupleur optique de recombinaison 4₂ constitué de deux fibres optiques fonctionnant selon le même mode qui sont localement jointes, de manière connue en soi, de manière à définir une structure de couplage en X ou en Y, ladite entrée E correspondant, comme connu, à une extrémité d'une première de ces deux fibres monomodes. Une seconde entrée e du coupleur 4₂ correspondant à une extrémité de la seconde fibre reçoit de manière analogue un faisceau qui est ici supposé obtenu à partir d'une partie d'un faisceau élémentaire incident Fᵢ₂ provenant du collecteur 2₂, par exemple via un montage optique diviseur 3₂ constitué comme le montage diviseur 3₁. Comme il est connu, il est possible de régler l'amplitude de l'onde formant un faisceau qui est appliquée au niveau du coeur d'une fibre à une extrémité de cette fibre en modifiant la focalisation du faisceau pour illuminer ce coeur en extrémité de manière appropriée.

Puisque les deux fibres constituant le coupleur 4₂ sont des fibres monomodes, l'onde incidente reçue par chacune d'elles est couplée avec ce mode qui est le seul que chacune de ces deux fibres est capable de transmettre. Le faisceau émergeant à une extrémité de sortie de fibre S du coupleur est déterminé et uniforme, avec une symétrie de révolution autour d'un axe qui correspond au prolongement de l'axe longitudinal de la fibre supposée rectiligne dans la région de sa sortie et ceci quelles que soient la forme et la répartition de l'énergie du faisceau incident, les fibres considérées étant supposées avoir une section transversale circulaire.

En conséquence, même si les deux faisceaux élémentaires injectés aux entrées E et e du coupleur 4₂ ont des sections et des répartitions d'amplitudes qui sont différentes, il se produit une combinaison interférométrique, à la jonction des deux fibres monomodes constituant le coupleur. Cette combinaison se réalise en fonction de la phase et de l'amplitude moyenne de chacun des deux faisceaux élémentaires incidents.

Le miroir de séparation constituant le séparateur 5 est orienté par construction de manière que le faisceau fᵣ, qu'il réfléchit, soit dirigé vers un miroir de focalisation 7 du montage optique diviseur 3₁. Le miroir 7 est chargé d'envoyer ce faisceau vers une entrée référencée E d'un coupleur de recombinaison 4₃ lui aussi constitué de deux fibres monomodes couplées en X ou en Y, ladite entrée E correspondant à une extrémité d'une des deux fibres monomodes du coupleur 4₃. Une seconde entrée e de ce coupleur 4₃ reçoit un faisceau élémentaire provenant du troisième des collecteurs ici considérés. Dans l'exemple de réalisation proposé ce faisceau élémentaire est fourni par l'intermédiaire d'un montage optique diviseur 3₃, qui correspond aux montages optiques diviseurs 3₁, 3₂, à partir du faisceau Fᵢ₃ que ce montage reçoit du collecteur 4₃

L'élément modulaire de dispositif de recombinaison interférométrique qui combine un montage optique diviseur de faisceau tel que 3, et au moins un coupleur de recombinaison constitué par association de deux fibres monomodes, tel que le coupleur 4₂ ou le coupleur 4₃, permet de contourner les difficultés liées à la chromaticité qui affectent les moyens connus de partage énergétique des faisceaux élémentaires connus qui ont été précédemment rappelés.

Selon une variante de réalisation, un élément modulaire peut éventuellement être réalisé pour assurer la division d'un faisceau élémentaire provenant d'un collecteur en un nombre entier de faisceaux supérieur à deux par simple interposition d'un miroir de séparation supplémentaire, identique ou fonctionnellement équivalent au miroir de séparation 5, sur le trajet de l'un ou de l'autre des faisceaux fᵣ, fₜ issus de ce miroir 5, de manière à diviser ce faisceau fᵣ ou fₜ en deux parties dans un rapport déterminé, selon les besoins.

L'association d'éléments modulaires de dispositif de recombinaison interférométrique, tels que définis ci-dessus, permet la réalisation d'un dispositif interférométrique mono ou multibras exploitable avec une pluralité de collecteurs combinés de manière synthétiser un collecteur de grandes dimensions.

Ce dispositif de recombinaison peut être constitué d'une pluralité de modules élémentaires associés sur un même étage, ou éventuellement sur plusieurs, avec mise en cascade de miroirs de séparation et/ou de modules élémentaires.

La solution proposée permet, en particulier, de réduire la sensibilité de la recombinaison interférométrique à l'alignement des faisceaux élémentaires recombinés et ceci d'une manière substantielle. Elle permet aussi de réduire significativement les problèmes de polarisation et de superposition des faisceaux. Elle autorise par ailleurs un contrôle précis et achromatique de l'amplitude et de la phase des faisceaux et elle n'implique qu'un nombre réduit de composants optiques par module de dispositif de recombinaison.

## Revendications

1. Dispositif modulaire de recombinaison interférométrique de plusieurs faisceaux électromagnétiques, UHF ou d'une des bandes de fréquences supérieures incluant les fréquences optiques, depuis le domaine de l'infrarouge et y compris celui de l'ultraviolet en passant par le domaine du visible, ces faisceaux étant fournis à partir d'une source, le dispositif comportant des collecteurs associés (2₁, 2₂, 2₃), notamment pour synthétiser un collecteur unique de grandes dimensions, **caractérisé en ce qu'**il comporte au moins un module dans lequel sont inclus :
- une pluralité de montages diviseurs (3₁, 3₂, 3₃) associés auxdits collecteurs (2₁, 2₂, 2₃) et chacun incorporant un séparateur de faisceau (5) doté de moyens d'interception (S1, S2 ou S3) positionnés de manière à partager en parties une pluralité de faisceaux incidents provenant d'un desdits collecteur, l'une de ces parties traversant le séparateur, via une ouverture ménagée à cet effet, l'autre ou les autres étant interceptées par une ou des surfaces des moyens d'interception qui sont préparée(s) soit pour réfléchir chacune une partie des faisceaux dans une direction différente donnée, soit alternativement pour l'absorber ;
- au moins un coupleur (4₂) qui est agencé pour assurer une recombinaison interférométrique des faisceaux qu'il reçoit et qui est réalisé par jonction locale de guides d'ondes, selon une structure en X ou en Y, chacun des guides recevant un faisceau provenant d'un collecteur différent, ces guides recevant un faisceau constitué par l'une des parties qui résulte du partage réalisé par ledit séparateur de faisceau.

2. Dispositif, selon la revendication 1, dans lequel le ou les coupleurs (4₂, 4₃) d'un module sont obtenus chacun par jonction locale d'au moins deux fibres optiques monomodes couplées dans une structure en X ou en Y, chacune des fibres recevant à une extrémité d'entrée un faisceau qui lui est transmis à partir d'un collecteur par l'intermédiaire d'au moins un séparateur de faisceau, les faisceaux reçus par un même coupleur étant issus de collecteurs différents.

3. Dispositif, selon la revendication 2, dans lequel un module comporte au moins une optique de focalisation (6 ou 7) qui transmet une partie de faisceau incident provenant d' un séparateur de faisceau vers une extrémité d'entrée d'une des fibres comportées par un coupleur, cette optique étant exploitée pour moduler en amplitude le faisceau appliqué à l'extrémité d'entrée de la fibre.

4. Dispositif, selon l'une des revendications 1 à 3, dans lequel un module comporte au moins deux séparateurs de faisceau montés en cascade.

5. Dispositif de recombinaison interférométrique, selon l'une des revendications 1 à 4, dans lequel sont traités des faisceaux optiques transmis par des collecteurs, de type télescope, orientés vers une même source de rayonnement, **caractérisé en ce qu'**il comporte une pluralité de modules qui sont associés chacun à au moins deux des collecteurs afin de recombiner de manière interférométrique les faisceaux optiques parvenant de ces collecteurs.

6. Dispositif de recombinaison interférométrique, selon l'une des revendications 1 à 5, **caractérisé en ce que** le séparateur de faisceau électromagnétique UHF ou d'une des bandes de fréquences supérieures incluant les fréquences optiques depuis le domaine de l'infrarouge et y compris celui de l'ultraviolet en passant par le domaine du visible comporte des moyens d'interception (S1, S2, S3 ou S4) positionnés ou positionnables pour pouvoir intercepter au moins une partie respectivement d'une pluralité de faisceaux incidents à diviser (Fi) pour les réfléchir en partie ou éventuellement en totalité dans au moins une direction par une surface réfléchissante (SF1), le nombre de directions prévues étant fixé par le nombre de surfaces réfléchissantes (SF1, SF2, S3 ou SF41, SF42, SF43, SF44) recevant les faisceaux à diviser (Fi) dans la configuration géométrique choisie pour les moyens d'interception, et/ou pour absorber au moins une partie des faisceaux interceptés par l'intermédiaire d'une surface absorbante, tout en permettant le passage en traversée de l'éventuelle partie des faisceaux incidents qui n'est pas interceptée.

7. Dispositif de recombinaison interférométrique, selon l'une des revendications 1 à 6, **caractérisé en ce que** les moyens d'interception sont constitués par une surface réfléchissante (SF1 ou SF2) à bordure circulaire qui est rendue incomplète par création d'une ouverture correspondant à l'absence d'un secteur ou d'un segment de la surface réfléchissante, plane ou courbe, de manière à assurer une découpe géométrique d'un faisceau à diviser (Fi) sur le trajet duquel cette surface est interposée en permettant d'obtenir deux faisceaux, l'un réfléchi (Fr) par la surface et l'autre (Ft) transmis au travers de l'ouverture dans des proportions correspondant aux dimensions respectives de l'ouverture et de la surface réfléchissante situées sur le trajet du faisceau à diviser soumis à découpe par le séparateur.

8. Dispositif de recombinaison interférométrique, selon l'une des revendications 1 à 6, **caractérisé en ce que** les moyens d'interception sont constitués par une surface réfléchissante (SF3) à bordure circulaire qui est rendue incomplète par création d'une ouverture centrale de manière à assurer une découpe géométrique d'un faisceau à diviser (Fi) sur le trajet duquel cette surface est interposée en permettant d'obtenir deux faisceaux, l'un réfléchi (Fr) par la surface et l'autre (Ft) transmis au travers de l'ouverture centrale dans des proportions correspondant aux dimensions respectives de l'ouverture et de la surface réfléchissante situées sur le trajet du faisceau à diviser soumis à découpe par le séparateur.

9. Dispositif de recombinaison interférométrique, selon l'une des revendications 1 à 6, **caractérisé en ce que** les moyens d'interception sont constitués par une pluralité de surfaces réfléchissantes (SF41 à SF44), planes ou concaves qui sont réunies et dont les bords jointifs délimitent les faces latérales d'une pyramide, qui est interposée sur le trajet d'un faisceau à diviser (Fi) et dont le sommet est orienté pour être atteint en premier par ledit faisceau à diviser, chaque surface assurant la réflexion dans une direction qui lui est propre d'un faisceau réfléchi qui correspond à la portion du faisceau à diviser qu'elle reçoit.

10. Dispositif de recombinaison interférométrique, selon l'une des revendications 1 à 6, **caractérisé en ce que** les moyens d'interception sont constitués par deux surfaces réfléchissantes (SF41 à SF44) réunies en un dièdre, est interposé sur le trajet d'un faisceau à diviser (Fi) et présente une arête orientée pour être atteinte en premier par ledit faisceau à diviser, chaque face assurant la réflexion dans une direction qui lui est propre d'un faisceau réfléchi qui correspond à la portion du faisceau à diviser qu'elle reçoit.

## Claims

1. A modular device for the interferometric recombination of a plurality of electromagnetic beams, of UHF or of one of the upper frequency bands including the optical frequencies, from the infrared range to the ultraviolet range, including the visible range, said beams being provided from a source, the device comprising associated collectors (2₁, 2₂, 2₃) notably for synthesising a single large collector, **characterised in that** it comprises at least one module which includes:
- a plurality of splitting assemblies (3₁, 3₂, 3₃) associated with said collectors (2₁, 2₂, 2₃) and each incorporating a beam splitter (5) provided with interception means (S1, S2 or S3) positioned so as to divide into parts a plurality of incident beams originating from one of said collectors, one of these parts passing through said splitter via an opening provided to this end, the other(s) being intercepted by one or more surfaces of the interception means that are designed either to each reflect a part of the beams in a different given direction or, alternatively, to absorb said part of the beams;
- at least one coupler (4₂) that is arranged to provide an interferometric recombination of the beams it receives and which is produced by the local joining of waveguides, according to an X or Y structure, each of said guides receiving a beam originating from a different collector, said guides receiving a beam constituted by one of the parts that results from the splitting effected by said beam splitter.

2. The device according to claim 1, wherein the one or more couplers (4₂, 4₃) of a module are each obtained by the local joining of at least two monomode optical fibres coupled in an X or Y structure, each of the fibres receiving at an input end a beam that is transmitted thereto from a collector via at least one beam splitter, the beams received by the same coupler originating from different collectors.

3. The device according to claim 2, wherein a module comprises at least one focusing optic (6 or 7) that transmits part of an incident beam originating from a beam splitter towards an input end of one of the fibres comprised by a coupler, said optic being used to modulate the amplitude of the beam applied to the input end of the fibre.

4. The device according to one of claims 1 to 3, wherein a module comprises at least two beam splitters mounted in a cascade like manner.

5. The interferometric recombination device according to any one of claims 1 to 4, wherein optical beams are processed that are transmitted via collectors of the telescope type, that are oriented towards a same radiation source, **characterised in that** it comprises a plurality of modules that are each associated with at least two of the collectors so as to recombine the optical beams that originate from these collectors in an interferometric manner.

6. The interferometric recombination device according to any one of claims 1 to 5, **characterised in that** the splitter of electromagnetic beams, of UHF or of one of the upper frequency bands, including the optical frequencies from the infrared range to the ultraviolet range, including the visible range, comprises interception means (S3, S2, S3 or S4) that are positioned or that can be positioned to be able to intercept at least one part, respectively, of a plurality of incident beams to be split (Fi) so as to reflect them in part or possibly in whole in at least one direction via a reflecting surface (SF1), the number of directions provided being set by the number of reflecting surfaces (SF1, SF2, S3 or SF41, SF42, SF43, SF44) receiving the beams to be split (Fi) in the geometric configuration selected for the interception means, and/or to absorb at least part of the beams intercepted via an absorbing surface, whilst allowing transmission of the possible part of the incident beams that is not intercepted.

7. The interferometric recombination device according to any one of claims 1 to 6, **characterised in that** the interception means are constituted by a reflecting surface (SF1 or SF2) with a circular edge that is rendered incomplete by the creation of an aperture that corresponds to the absence of a sector or of a segment of the reflecting, flat or curved surface so as to provide a geometric cut of a beam to be split (Fi), said surface being placed in the path of said beam to be split thus allowing two beams to be obtained, one (Fr) of which is reflected by the surface and the other (Ft) is transmitted through the aperture in proportions that correspond to the respective dimensions of the aperture and of the reflecting surface situated in the path of the beam to be split that is subject to splitting by the splitter.

8. The interferometric recombination device according to any one of claims 1 to 6, **characterised in that** the interception means are constituted by reflecting surface (SF3) with a circular edge that is rendered incomplete by the creation of a central aperture so as to provide a geometric cut of a beam to be split (Fi),said surface being placed in the path of said beam to be split thus allowing two beams to be obtained, one (Fr) of which is reflected by the surface and the other (Ft) is transmitted through the central aperture in proportions that correspond to the respective dimensions of the aperture and of the reflecting surface situated in the path of the beam to be split that is subject to splitting by the splitter.

9. The interferometric recombination device according to any one of claims 1 to 6, **characterised in that** the interception means are constituted by a plurality of reflecting, flat or concave surfaces (SF41 to SF44) that are combined and for which the connecting edges delimit the lateral surfaces of a pyramid, which is placed in the path of a beam to be split (Fi) and for which the vertex is oriented in order to be reached first by said beam to be split, each surface providing the reflection, in a direction specific thereto, of a reflected beam that corresponds to the portion of the beam to be split that it receives.

10. The interferometric recombination device according to any one of claims 1 to 6, **characterised in that** the interception means are constituted by two reflecting surfaces (SF41 to SF44) combined in a dihedral, is placed in the path of a beam to be split (Fi) and has an edge that is oriented in order to be reached first by said beam to be divided, each surface providing the reflection, in a direction specific thereto, of a reflected beam that corresponds to the portion of the beam to be split that it receives.

## Patentansprüche

1. Modulare Vorrichtung zur interferometrischen Rekombination mehrerer elektromagnetischer Strahlen, mit UHF oder aus einem der oberen Frequenzbänder einschließlich der optischen Frequenzen, vom Infrarotbereich zum Ultraviolettbereich über den sichtbaren Bereich, wobei die Strahlen von einer Quelle bereitgestellt werden, wobei die Vorrichtung zueinander gehörende Kollektoren (2₁, 2₂, 2₃) umfasst, insbesondere zum Synthetisieren eines einzigen großen Kollektors, **dadurch gekennzeichnet, dass** sie wenigstens ein Modul umfasst, das Folgendes beinhaltet:
- mehrere Teilungsschaltungen (3_{1,} 3₂, 3₃), die mit den Kollektoren (2₁, 2₂, 2₃) assoziiert sind und jeweils einen Strahlenteiler (5) beinhalten, der mit Abfangmitteln (S1, S2 oder S3) versehen ist, die so positioniert sind, dass sie mehrere von einem der Kollektoren kommende Strahlen unterteilen, wobei einer dieser Teile durch eine hierfür vorgesehene Öffnung durch den Teiler passiert, wobei der/die andere(n) Teil(e) von einer oder mehreren Flächen der Abfangmittel abgefangen wird/werden, die jeweils die Aufgabe haben, einen Teil der Strahlen in eine andere gegebene Richtung zu reflektieren oder ihn zu absorbieren;
- wenigstens einen Koppler (4₂) zum Bewirken einer interferometrischen Rekombination der von ihm empfangenen Strahlen und der durch lokales Aneinanderfügen von Wellenleitern gemäß einer X- oder Y-Strukturerzeugt wird, wobei jeder der Leiter einen von einem anderen Kollektor kommenden Strahl empfängt, wobei die Leiter einen von einem der Teile gebildeten Strahl empfangen, der von der Teilung durch den Strahlenteiler resultiert.

2. Vorrichtung nach Anspruch 1, wobei der oder die Koppler (4₂, 4₃) eines Moduls jeweils durch lokales Aneinanderfügen von wenigstens zwei Monomoden-Optofasern erhalten werden, die zu einer X- oder Y-Struktur gekoppelt sind, wobei jede der Fasern an einem Eingangsende einen Strahl empfängt, der von einem Kollektor über wenigstens einen Strahlenteiler dorthin übertragen wird, wobei die von demselben Koppler empfangenen Strahlen von unterschiedlichen Kollektoren ausgegeben werden.

3. Vorrichtung nach Anspruch 2, wobei ein Modul wenigstens eine Fokussieroptik (6 oder 7) umfasst, die einen Teil eines von einem Strahlenteiler kommenden Einfallsstrahls zu einem Eingangsende von einer der von einem Koppler umfassten Fasern überträgt, wobei die Optik zum Modulieren der Amplitude des auf das Eingangsende der Faser applizierten Strahls dient.

4. Vorrichtung nach einem der Ansprüche 1 bis 3, wobei ein Modul wenigstens zwei in Kaskade geschaltete Strahlenteiler umfasst.

5. Interferometrische Rekombinationsvorrichtung nach einem der Ansprüche 1 bis 4, wobei optische Strahlen verarbeitet werden, die durch Kollektoren des Teleskoptyps gehen, die in Richtung auf dieselbe Strahlungsquelle orientiert sind, **dadurch gekennzeichnet, dass** sie mehrere Module umfasst, die jeweils mit wenigstens zwei der Kollektoren assoziiert sind, um die von diesen Kollektoren stammenden optischen Strahlen auf interferometrische Weise zu rekombinieren.

6. Interferometrische Rekombinationsvorrichtung nach einem der Ansprüche 1 bis 5, **dadurch gekennzeichnet, dass** der Teiler von elektromagnetischen Strahlen, mit UHF oder aus einem der oberen Frequenzbänder einschließlich der optischen Frequenzen, vom Infrarotbereich zum Ultraviolettbereich über den sichtbaren Bereich, Abfangmittel (S1, S2, S3 oder S4) umfassen, die so positioniert sind oder werden können, dass sie jeweils wenigstens einen Teil von mehreren zu teilenden (Fi) Einfallsstrahlen abfangen, um sie teilweise oder eventuell ganz in wenigstens einer Richtung durch eine reflektierende Fläche (SF1) zu reflektieren, wobei die Zahl der vorgesehenen Richtungen durch die Zahl der reflektierenden Flächen (SF1, SF2, S3 oder SF41, SF42, SF43, SF44) bestimmt wird, die die zu teilenden Strahlen (Fi) in der für das Abfangmittel gewähltengeometrischen Konfiguration empfangen, und/oder um wenigstens einen Teil der mittels einer absorbierenden Fläche abgefangenen Strahlen zu absorbieren, während der eventuelle nicht abgefangene Teil der Einfallsstrahlen durchgelassen wird.

7. Interferometrische Rekombinationsvorrichtung nach einem der Ansprüche 1 bis 6, **dadurch gekennzeichnet, dass** die Abfangmittel von einer reflektierenden Fläche (SF1 oder SF2) mit einem kreisförmigen Rand gebildet werden, der durch Erzeugen einer Öffnung unvollständig gemacht wird, die dem Fehlen eines Sektors oder eines Segments der reflektierenden, flachen oder gekrümmten Fläche entspricht, um einen geometrischen Schnitt eines zu teilenden Strahls (Fi) zu bewirken, auf dessen Bahn diese Fläche platziert wird, so dass zwei Strahlen erhalten werden können, von denen einer (Fr) von der Fläche reflektiert wird und der andere (Ft) durch die Öffnung in Anteilen durchgelassen wird, die den jeweiligen Abmessungen der Öffnung und der reflektierenden Fläche entsprechen, die sich auf der Bahn des zu teilenden Strahls befindet, der von dem Teiler geschnitten werden soll.

8. Interferometrische Rekombinationsvorrichtung nach einem der Ansprüche 1 bis 6, **dadurch gekennzeichnet, dass** die Abfangmittel durch eine reflektierende Fläche (SF3) mit einem kreisförmigen Rand gebildet werden, der durch Erzeugen einer mittleren Öffnung unvollständig gemacht wird, um einen geometrischen Schnitt eines zu teilenden Strahls (Fi) zu erzeugen, auf dessen Bahn die Fläche platziert wird, so dass zwei Strahlen erhalten werden können, von denen einer (Fr) von der Fläche reflektiert wird und der andere (Ft) durch die mittlere Öffnung in den Anteilen durchgelassen wird, die den jeweiligen Abmessungen der Öffnung und der reflektierenden Fläche entsprechen, die sich auf der Bahn des zu teilenden Strahls befindet, der von dem Teiler geschnitten werden soll.

9. Interferometrische Rekombinationsvorrichtung nach einem der Ansprüche 1 bis 6, **dadurch gekennzeichnet, dass** die Abfangmittel durch mehrere reflektierende, flache oder konkave Flächen (SF41 bis SF44) gebildet werden, die vereinigt werden und deren Verbindungsränder die Seitenflächen einer Pyramide begrenzen, die sich auf der Bahn eines zu teilenden Strahls (Fi) befindet und deren Scheitelpunkt so orientiert ist, dass er zuerst von dem zu teilenden Strahl erreicht wird, wobei jede Fläche die Reflexion in einer für sie spezifischen Richtung eines reflektieren Strahls bewirkt, der dem Teil des zu teilenden Strahls entspricht, den sie empfängt.

10. Interferometrische Rekombinationsvorrichtung nach einem der Ansprüche 1 bis 6, **dadurch gekennzeichnet, dass** die Abfangmittel von zwei reflektierenden Flächen (SF41 bis SF44) gebildet werden, die zu einem Dieder vereinigt sind, der auf der Bahn eines zu teilenden Strahls (Fi) platziert ist und eine Anschlagfläche aufweist, die so orientiert ist, dass sie zuerst von dem zu teilenden Strahl erreicht wird, wobei jede Fläche die Reflexion in einer für sie spezifischen Richtung eines reflektierten Strahls bewirkt, der dem Teil des zu teilenden Strahls entspricht, den sie empfängt.
